# EUROPEAN PATENT SPECIFICATION

(11) **EP 4 562 498 B1**
(45) Date of publication and mention of the grant of the patent: **09.12.2026**
(21) Application number: 23749003.2
(22) Date of filing: 27.07.2023
(51) Int. Cl.: G06F 12/14, G06F 9/455

(54) **ISOLATION OF APPLICATIONS BY A KERNEL**
ISOLIERUNG VON ANWENDUNGEN DURCH EINEN KERNEL
ISOLATION D´APPLICATIONS PAR UN NOYAU

(30) Priority: 29.07.2022 EP 22187831
(43) Date of publication of application: 04.06.2025
(73) Proprietor: Elektrobit Automotive GmbH, 91058 Erlangen (DE)
(72) Inventor: LAMPKA, Kai, 81739 München (DE); THURLBY, Joel, 81739 München (DE); HAEHNEL, Marcus, 01097 Dresden (DE); LACKORZYNSKI, Adam, 01097 Dresden (DE)
(74) Representative: Aumovio Corporation
(86) International application number: PCT/EP2023/070817
(87) International publication number: WO 2024/023204

(56) References cited:
- HEISER GERNOT: "The sel4 Microkernel: An Introduction", 10 June 2020 (2020-06-10), pages 1 - 32, XP093087489, Retrieved from the Internet <URL:https://sel4.systems/About/seL4-whitepaper.pdf> [retrieved on 20230929]
- LIEBERGELD STEFFEN: "Lightweight Virtualization on Microkernel-based Systems", 27 January 2010 (2010-01-27), pages 1 - 100, XP055948619, Retrieved from the Internet <URL:https://citeseerx.ist.psu.edu/viewdoc/download?doi=10.1.1.650.5260&rep=rep1&type=pdf> [retrieved on 20220803]
- WEISS MICHAEL ET AL: "Integrity Verification and Secure Loading of Remote Binaries for Microkernel-Based Runtime Environments", 2014 IEEE 13TH INTERNATIONAL CONFERENCE ON TRUST, SECURITY AND PRIVACY IN COMPUTING AND COMMUNICATIONS, IEEE, 24 September 2014 (2014-09-24), pages 544 - 551, XP032725023, DOI: 10.1109/TRUSTCOM.2014.69
- THOMAS SEWELL ET AL: "seL4 Enforces Integrity", 22 August 2011, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 325 - 340, ISBN: 978-3-540-74549-5, XP019161162
- LAMPKA KAI ET AL: "Using Hypervisor Technology for Safe and Secure Deployment of High-Performance Multicore Platforms in Future Vehicles", 2019 26TH IEEE INTERNATIONAL CONFERENCE ON ELECTRONICS, CIRCUITS AND SYSTEMS (ICECS), IEEE, 27 November 2019 (2019-11-27), pages 783 - 786, XP033693022, DOI: 10.1109/ICECS46596.2019.8964912
- LACKORZYNSKI ADAM: "The L4Re Microkernel", 1 May 2020 (2020-05-01), pages 1 - 49, XP093087500, Retrieved from the Internet <URL:https://os.inf.tu-dresden.de/Studium/MkK/SS2020/06_l4re.pdf> [retrieved on 20230929]

## Description

The present disclosure relates to the technological field of operating systems (OS). In particular, embodiments of the present disclosure relate to a concept for isolation in space and time of applications in operating systems and as mandated by safety or security norms and standards. This isolation is also known as freedom from interference between software artefacts running in the same execution environment, i.e, on the same operating system and processor.

Software development according to the ISO 26262 entails, among other things, the application of relevant best practices for the entire V-model of software development based on the software's assigned safety level. For example, with the second lowest Automotive Safety Integrity Level, ASIL-B, the ISO 26262 highly recommends that not only exhaustive line coverage is provided, but branch coverage and static code analysis as well.

The document "The sel4 Microkernel: An Introduction", by Heiser Gernot, 10 June 2020, Retrieved from the Internet: URL : https ://sel4.systems/About/seL4-whitepaper.pdf [retrieved on 2023-09-29] describes the architecture and principles of the seL4 microkernel, a third-generation member of the L4 microkernel family. The core design philosophy of seL4 is minimality: the kernel provides only essential mechanisms, such as inter-process communication (IPC), scheduling, and memory management, while all policy decisions are delegated to user-level components. Access control in seL4 is enforced through a capability-based model.

For pre-existing software, the ISO 26262 standard provides software component qualification methods as an alternative to unwarranted re-development according to the safety standard. In this case, the safety standard recognizes that pre-existing software may likely not have been developed with the same methods recommended for safety-related components. To ensure that the safety assurance is sufficient, the standard prescribes a range of measures to verify that the resulting quality of the software components is sufficient for their use in a safety context. Software qualification for pre-existing software can be excluded when it can be shown that the software will not interfere with software contributing to the safety or security function.

As safety-related development and safety qualification can easily become insurmountably expensive.

Hence, there may be a demand of an improved concept for software security.

This demand may be satisfied the by subject-matter of the appended independent claims. So, embodiments of the present disclosure provide a solution for establishing isolation between SW units running on the same processor and operating system, in particular, between unqualified and unqualified SW components. Beneficial embodiments thereof are disclosed in the appended dependent claims.

As the isolation addresses both, safety and security, both terms are used synonymously and interchangeably.

Due to the high costs, in practice, the safety functionality may be reduced to a bare minimum. In turn, mechanisms and justification may need to be provided addressing why (hidden) error propagation from any unqualified component or non-safety-relevant application to a safety component or safety-relevant application has been excluded. One idea of the proposed approach is to do this is to ensure that interference is strictly ruled out, i.e., isolation may be ensured by the design and configuration, in hardware and software.

Embodiments of the present disclosure provide a method for a kernel and for executing at least one safety-relevant application and at least one non-safety-relevant application. The method comprises receiving, by a partition manager for the kernel, from at least one of the applications a system call for a service. Further, the method provides for checking, by the partition manager, if the service is permitted to the application, and providing the service to the application if the service is permitted to the application. In this way, undesired and potentially malicious services may be avoided. In practice, it may be malicious that the non-safety-relevant application causes that a thread is moved to a core dedicated to the safety-relevant application. In other examples, access of the non-safety-relevant application to a memory area exclusively dedicated to the safety-relevant application may be undesired. In the present approach, corresponding services by the kernel may be not allowed to the non-safety-relevant application. So, applying the proposed approach, the corresponding service is refused. In this way, malicious error propagation between the applications may be avoided. Accordingly, the proposed approach allows to meet certain qualifications and/or safety/security standards.

In some embodiments, the method further comprises tracking, by the partition manager or a separate memory managing component, ownership of memory pages for the safety-relevant application and the non-safety-relevant application(s). In this way, it may be ensured that no memory exclusively dedicated or allocated to the safety-relevant application is also allocated to the non-safety-relevant application. So, the ownership tracking allows to ensure memory isolation to prevent error propagation through shared memory. In other words, it allows to ensure strict memory partition, no joint ownership over a physical memory pages if not intended by the owner, here the safety partition manager or safety application.

In practice, checking if the service is permitted to the application may comprise obtaining information on service privileges of the application and information on the service and comparing the information on the service privileges and the information on the service to check if the service is permitted to the application. The information on the service privileges, e.g., is hardcoded in the partition manager and/or the kernel or could be provided as configuration data evaluated at run-time.

According to the invention, providing the service to the application comprises forwarding the system call to the kernel for the kernel to provide the service. In this way, the service is outsourced to the kernel. So, one could refrain from implementing the service in the partition manager.

In practice, the service call may include an inter-process communication request. Accordingly, providing the service to the application may comprise establishing the IPC.

Establishing the IPC may comprise forwarding, by the partition manager, the IPC request to the kernel for the kernel to establish an IPC connection for the IPC. In this way, the partition manager serves as kind of a proxy server in establishing the IPC.

Alternatively or additionally, establishing the IPC connection comprises providing the application with information on an IPC memory area for exchanging data as part of the IPC. In this way, communication between the partition manager and the kernel may be reduced.

In some embodiments, the partition manager is configured to map memory areas to different partitions. Alternatively, separate partition managers may be provided for mapping dedicated memory area to their respective partition.

So, the method may further comprise obtaining, by the partition manager, memory for applications from the memory management component and mapping, by the partition manager, a first memory area of the memory to a safety partition for the safety-relevant application. Further, the method may comprise mapping, by another or the same partition manager, a second memory area of the memory to one or more other safety or non-safety partitions for another safety or non-safety-relevant applications. For memory isolation, the first and the second memory area may not overlap besides an explicitly shared memory area, if such a shared memory is provided.

In some embodiments, the method comprises determining, by the partition manager, the second memory area in consideration of the first memory area and providing the second memory area to the other partition manager or itself.

In further embodiments, the method further comprises allocating one or more memory areas to another partition manager for one or more safety and non-safety-relevant applications which shall be isolated from another and previously defined memory areas.

As a skilled person having benefit from the present disclosure will appreciate, (all) steps of the proposed method may be implemented in a computer program. So, embodiments of the proposed method may provide a computer-implemented method that provides that the steps are executed by a computer or any other programable type of hardware.

Accordingly, embodiments of the present disclosure may also provide a computer program comprising instructions which, when the computer program is executed by a computer, cause the computer to carry out the method proposed herein.

As well, embodiments of the present disclosure may provide an apparatus comprising one or more interfaces for communication and a data processing circuit configured to execute the proposed method.

As the skilled person will also appreciate, the present approach may be applied in various types of apparatuses. In particular, safety/security-critical apparatuses such as vehicles may benefit from the proposed approach.

Accordingly, embodiment may provide a vehicle comprising the proposed apparatus.

### Brief description of the drawings

- Fig. 1: schematically illustrates a flow chart of an embodiment of a method for a kernel and for executing at least one safety-relevant application and at least one non-safety-relevant application;
- Fig. 2a: shows a block diagram schematically illustrating an exemplary software architecture for the proposed approach;
- Fig. 2b: shows a block diagram schematically illustrating an exemplary use case of the proposed approach; and
- Fig. 3: shows a block diagram schematically illustrating an embodiment of the proposed apparatus.

### Detailed description

Background information on Operating Systems and OS kernel design paradigms:
With at least two privilege levels, software can be run in de-privileged mode while the software running in the privileged mode exercises control over it. This software component is typically called the operating system (OS) kernel, or hypervisor. Software running in a de-privileged mode are typically called programs, applications, tasks, or processes.

In this view, the OS kernel is a computer program that manages computer hardware, software resources and provides common functionality for other (user-initiated) computer programs. The most prominent example is the service which implements the sharing of the processor cores such that each started user application gets a (fair) chance to be executed. This service is referred to as scheduler.

The OS may allow the application code to directly access hardware, but maintains specific configurations for each application, client. E.g., the scheduler needs to save/restore the computation context of a program before letting it run on a core. Special hardware resources, e.g., interrupt registers, memory-protection registers and/or the like, are protected by the processor mode also referred to as privilege or execution level. This means the core needs to be in a privileged mode when accessing these resources, otherwise any write access will generate an exception. The privileged mode is a basic mechanism to ensure correct execution of any scheduled process. The privileged mode is set when the operating system becomes active, e.g., when an application executes a system call. It is the instruction which triggers an interrupt and enforces a context switch to the operating system. Once the execution of the user application begins, the processor mode has been set back to a lower privilege level and the core continues with executing the currently scheduled application. The individual entities subject to OS management are referred to as processes or tasks, opposed to threads which are the entities inside a process or tasks and used as scheduling entities.

The fundamental functionality such as process management and alike is implemented in the core part of the operating system. This core part is commonly referred to as the OS kernel. The kernel resides in its own memory region, it is the only application executing in privileged processor mode and it is statically linked, i.e., it has all of the needed functionality compiled in.

The kernel's interface to the outside is a low-level abstraction layer. When an application running under the control of a kernel requests a service from any other instance, i.e., from the kernel or another application, it must invoke a so called system call (syscall). System calls come usually through wrapper functions that are exposed to user applications by a system (runtime) library. The library embeds the assembly code for entering the kernel after loading the CPU registers with the syscall number and its parameters. UNIX-like operating systems accomplish this task using the C standard library.

Depending on the design of the kernel, a kernel might not only control essential parts of the processor, it may also operate the remaining hardware resources, e.g. I/O devices, , cryptography, graphic engines etc.- Device control is executed via so called device drivers, which arbitrate conflicts between processes concerning such resources, and optimizes their utilization, e.g., file and network access etc.

With a monolithic kernel, all functions executed while serving a system call operate in the same address space and at a high or even the highest privilege level of the processor. This holds for functions providing basic functionality like process management, memory management as well as for device drivers.

Commonly, driver support for a specific processor and with respect to a specific operating system is offered by the SoC vendors. In an automotive setup and for its specific microcontrollers these drivers are shipped as part of the microcontroller abstraction layer (MCAL). In other domains relating to embedded systems, drivers are already integrated into Linux or shipped as part of the so called board support package (BSP). Besides the hardware-specific drivers and other processor specific adaptations needed for the operating system to function on a specific processor, the BSP also might contain bootloader stages for loading and starting the operating system.

On most systems, the kernel is one of the first programs loaded on startup (after the bootloader). Unlike the boot loader or boot stages, like uboot (universal boot loader), the kernel is resident in memory, handles the start-up of the first user applications and facilitates interactions between hardware and software applications at runtime via the device drives.

Microkernel-based OS design:
In contrast to the above design pattern known as monolithic kernel design, the microkernel design pattern evolved; starting with MACH in the late 80-ties. Microkernel-based operating systems (OS) follow a design principle that puts all OS functionality into modules, in such a rigid fashion that even the kernel itself is reduced to a minimal set of required features or services. The set of kernel features or kernel services is primarily derived from the requirements of using privilege separation features of the hardware architecture, e.g., memory management or memory protection units. The kernel provides the functionality required for ensuring isolation or separation between the user-level components and means for basic communication. Isolation must be ensured memory-wise, using virtual memory, and temporally, using preemption, i.e., being able to pre-empt execution of an application and switching to another one. Communication is provided by a mechanism called Inter-Process-Communication (IPC), allowing applications to exchange messages and call functions implemented in other applications (so-called servers).

Because the kernel may only need to implement this basic functionality, its size is close to minimal and justifies the name microkernel. All other functionality is built on top of the microkernel using small components, including device drivers, file systems, memory management and virtualization support. Applications depend only on components they use and because each module has specific responsibilities, this results in a small Trusted-Computing-Base (TCB). This so-called microkernel design principle supports building secure and safe systems, as functionality only depends on software modules actually required, whilst modules themselves are Isolated from each other.

In Europe, microkernel-based OS design was adopted and significantly improved from the mid-nineties onward, starting with the L4 microkernel of Jochen Liedtke. Later on, the L4 API evolved and different kernels were ported to other architectures, such as ARM, Alpha and MIPS. The development evolved into different branches including Fiasco.OC and its L4Re (L4 Runtime Environment) as used in this disclosure for demonstration purpose.

Overview of the new safety pattern:
Unlike the vast body of work related to seL4, the approach presented herein extends beyond the microkernel and drivers. It is shown herein how a complete software stack based on the L4-microkernel idea, including a fully-edged userland, can be taken to certification and that the deployment of highly complex software applications of different safety levels executing on a modern multicore processor is possible.

Proprietary systems have been following the microkernel-based principles for similar reasons and have been certified for a wide range of use-cases.

Microkernel-based OS follow a design principle that puts OS functionality into modules, in such a fashion that even the kernel itself is reduced to a minimal set of required features. The set of kernel features is primarily derived from the requirements of using privilege separation features of the hardware architecture.

With at least two privilege levels, software can be run in de-privileged mode while the software running in the privileged mode exercises control over it. This software component is typically called the kernel, or hypervisor. Software running in a de-privileged mode are typically called programs, applications, tasks, or processes.

The kernel provides the functionality provided for ensuring isolation between the user-level components and means for basic communication. Isolation must be ensured memory-wise, using virtual memory, and temporally, using preemption, i.e., being able to preempt execution of an application and switching to another one. Communication is provided by a mechanism called Inter- Process-Communication (IPC), allowing applications to exchange messages and call functions implemented in other applications (so-called servers).

Because the kernel only needs to implement this basic functionality, its size is close to minimal and justifies the name microkernel. All other functionality is built on top of the microkernel using small components, including drivers, file systems, memory management and virtualization. Applications depend only on components they use and because each module has specific responsibilities, this results in a small Trusted-Computing-Base (TCB). This design principle supports building secure and safe systems, as functionality only depends on software modules actually required, whilst modules themselves are isolated from each other.

In the following the architecture of a conventional L4Re system is described, the qualification strategy and the challenges that often come with it. The newly developed safety architecture according to the invention builds on the IPC idea inherent to microkernels.

It is based on the implementation of a component that provides essential features to establish freedom-from-interference among applications.

The present idea is not limited to microkernel and their IPC mechanism. In general, memory ownership tracking could be done in the (monolithic) kernel and the relevant part of the system calls could be directed to the partition manager or system call proxy. Like our design, such a proxy would filter the system calls for correctness. This system call proxying is beneficial as in practice, the kernel receives system calls from applications to provide a requested service, e.g., for allocation of resources such as memory area and/or processing cores. In doing so, the same resources may be allocated to safety-relevant applications and non-safety-relevant application as the kernel might have no general knowledge about the intended partitioning of resources. In such cases, errors may propagate from non-safety-relevant applications to safety-relevant applications. In this way, the reliability and/or integrity of safety-relevant application may be affected.

The present disclosure, therefore, provides a solution addressing that issue. In particular, the present disclosure demonstrates how a complete software stack based on an open source microkernel can be certified to meet certain safety standards, e.g., the ISO standard 26262, without qualifying a majority of its pre-existing software according to the ISO 26262 standard or even re-implementing it.

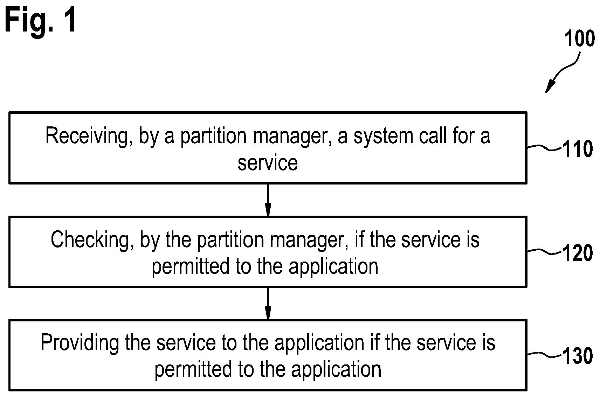

Fig. 1 shows a flow chart schematically illustrating an embodiment of a method 100 for a kernel for executing at least one safety-relevant application and non-safety-relevant application. Embodiments of such a method provide for forwarding a service request to the kernel. In this case not the partition manager but the kernel is handling the service request and returns the result to the original caller and a partition manager becomes a proxy for IPC service requests. In context of the present disclosure, the safety-relevant application may be understood as an application for a safety-relevant functionality. In practice, the safety-relevant functionality requires a certain SIL. So, the safety-relevant application adheres to a higher SIL than the non-safety relevant application. In implementations of the proposed approach, the safety-relevant application adheres to ASIL A, B, C, or D while the non-safety relevant application may adhere to ASIL QM, which is why the non-safety relevant application may be also referred to herein as QM application.

The method 100 comprises receiving 110, by a partition manager for the kernel, from at least one of the applications a system call for a service. In embodiments, the partition manager or system call proxy service can be a separate software component for the safety partition or more QM applicationsfor executing the safety-relevant application. In practice, the partition manager may be configured to Besides loading and starting of the safety-relevant applications the partition manager may also allocate and map resources such as a dedicated memory area to the safety-relevant application. In that sense, the partition manager serves as the boot task to the safety-relevant application and the root task of the QM partition.

The proposed approach particularly provides for using the partition manager as an instance for verifying whether an application is allowed to receive services requested by the application whilst a desired isolation of resources for the safety-relevant application is ensured. In doing so, the partition manager may act as kind of a proxy for communication between the QM applications and the kernel or between the QM applications and relevant safety applications, as laid out in more detail later.

For the above verification, method 100 provides for checking 120, by the partition manager, if the service is permitted to the application. For this, the partition manager may compare the requested service according to the system call with predefined service privileges of the requesting application.

Further, the method 100 suggests providing 130 the service to the application if the service is permitted to the application. In this way, the application only receives the service if it is privileged to do so. This may particularly ensure that services are provided which do not allow error propagation or the application is trusted to not inject errors, e.g., when a safety application is the requester.

In some use cases, the requested service, e.g., comprises an IPC request and/or threat shift request. In some software architectures, this may cause that resources, e.g., processing core and/or memory area is shared between the safety-relevant application and the non-safety-relevant application and, so, that error propagation from the non-safety-relevant application to the safety-relevant application is possible if not filtered by the partition manager

In embodiments of the proposed approach, privileges can be set such that services which possibly enable error propagation from the non-safety-relevant application to the safety-relevant application are refused or only allowed for specific parameters. For this, e.g., service requests that would result in non-safety-relevant application using the same processing core or memory area as the safety-relevant application are refused. In order to do so, e.g., privileges of the non-safety-relevant application are set accordingly. In practice, the non-safety-relevant application, e.g., it may be not allowed/permitted to allocate the processing core and/or memory area dedicated to the safety-relevant application to the non-safety-relevant application. Similarly, any other safety-critical service may be denied to the non-safety-relevant application. Apart from that, a predefined dedicated shared memory may be granted to the safety-relevant application and non-safety-relevant application, e.g., for data exchange during operation.

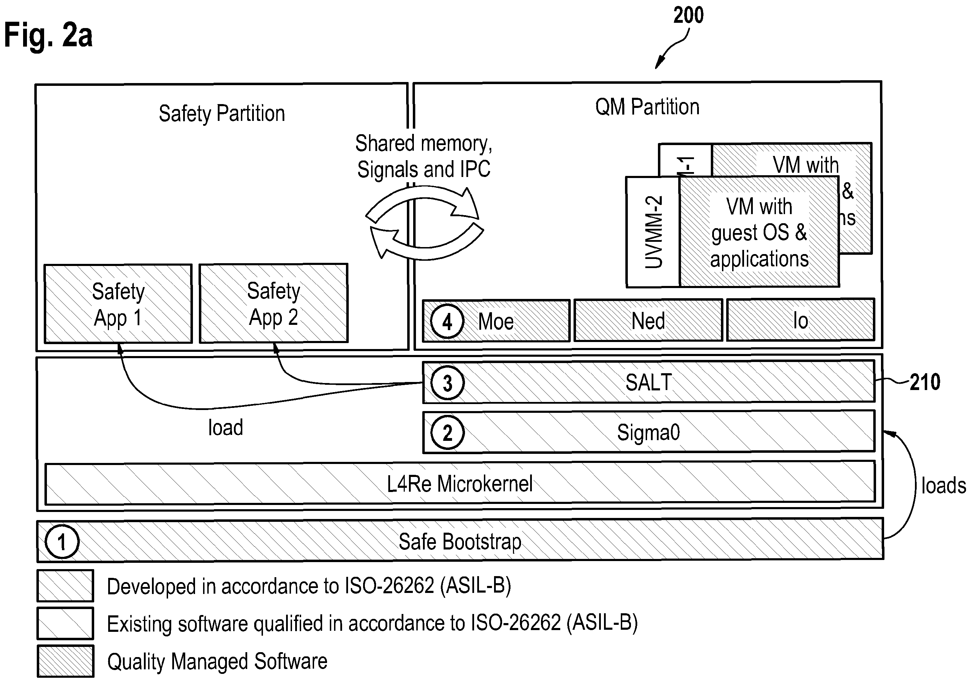

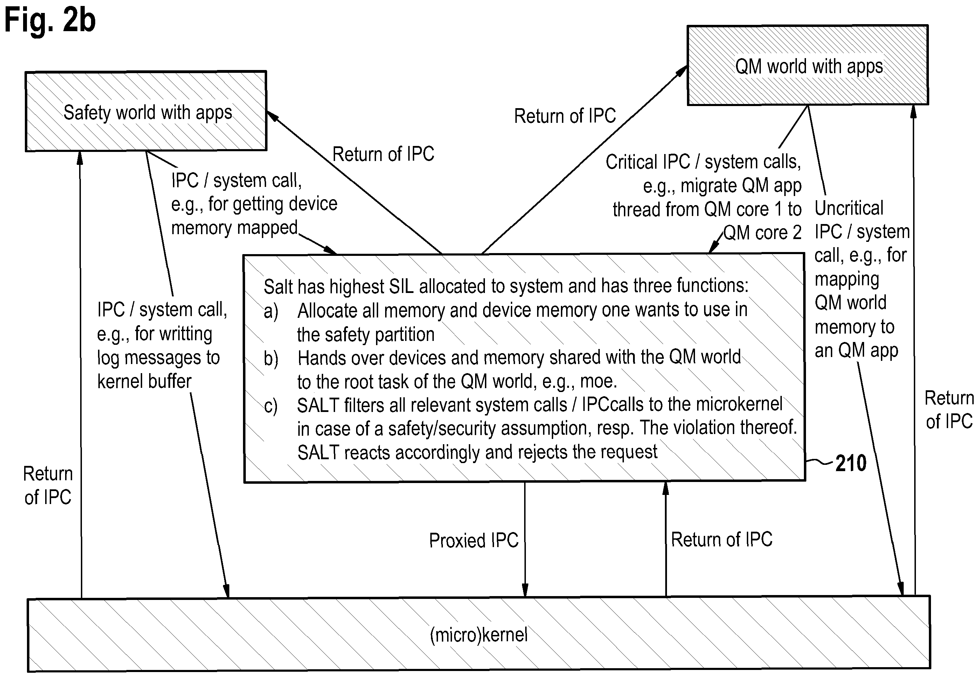

Further, aspects and features are described below with reference to figs. 2a and 2b. L4Re as an example for an embodiment of the proposed approach:
In the following the architecture of a conventional L4Re system is described by way of example for a better understanding of the context of the invention.

Figure 2a shows a block diagram schematically illustrating an exemplary software 200 architecture according to the proposed approach.

The illustrated software architecture, e.g., includes a kernel, here an L4Re microkernel is used, also known as Fiasco.OC and the L4Re userland which comprises a set of user space components and libraries (detailed below). As usual, the L4Re microkernel may be the only component running in the privileged mode of the processor. It provides basic mechanisms for spatial isolation, temporal isolation, execution, and communication. Spatial isolation is realized by means of virtual memory, using an MMU (Memory Management Unit) to manage and protect access to memory and implemented in tasks. Execution is provided through threads. Multiple threads can run within one task. Temporal isolation is implemented through preemptive scheduling. Inter-process communication (IPC) is the principal communication mechanism, both between applications and to invoke the kernel. IPC may be synchronous and un-buffered. High-bandwidth asynchronous communication can be built through shared memory between tasks, using software interrupts as a notification facility.

The rights management of the system is based on capabilities. Capabilities are pointers to objects, protected by the microkernel. By modeling all functionality into objects, the objects can be pointed to by capabilities, which then act as access rights to those objects. Calling methods of those objects, referred to as method invocation, is a universal mechanism in the system used for both invoking kernel services as well as invoking services from applications running in de-priveleged processor mode as part of the L4Re system.

Capabilities implement a local naming scheme and represent the state-of-the-art in rights management systems for operating systems. The initial set of capabilities for a task must be provided by the loader of the task, as with an empty set of capabilities a task cannot communicate anywhere and thus not use any service nor hardware. The system provides so-called factories, at both the kernel and user-level, to create new objects, such as threads and tasks. Access rights to objects can be passed on to other tasks by sending them to those tasks by IPC. This concept is referred to as recursive IPC handling in the following.

Memory for tasks is managed in a similar fashion, but is typically made available through a fault-based mechanism. When a thread in a task causes a page fault, the microkernel will generate a page fault IPC message to the pager of this thread. A pager is a thread that is able to resolve a page fault by mapping a page of memory to the faulting thread's task such that the thread is able to continue execution. A similar mechanism is used for exception handling.

The microkernel implements a priority-based round-robin scheduling scheme. Each thread has a priority assigned and the thread with the highest priority runs until its quantum runs out (the next thread with the same priority is selected), the thread blocks through IPC, or a higher priority thread becomes ready. Upon blocking, the next ready thread is selected.

The L4Re provides the environment to facilitate easy implementation of user applications. It abstracts from the kernel's APIs and allows to build complex use-cases. L4Re is composed of a set of libraries and applications, among them Sigma0, Moe, lo, and Ned.

Sigma0 is the root of the pager hierarchy in L4Re. By allowing tasks to pass on access rights to memory pages, a hierarchy is established with Sigma0 being the root of it. Sigma0 is special for the kernel and gets all the memory from it, allowing to build user-level memory management. In the presented innovation, sigma0 is requested to implement memory ownership tracking. Alternatively, this duty could be placed on the partition manager. Beside the kernels ability to do correct memory management, i.e., address space switching, the ownership tracking of physical memory pages is the other ingredient to memory isolation between partitions. The third pilar is the ability of the partition manager to only pass the sigma0 capability to the root task of the QM partition, once the safety partition has terminated its start-up phase.

The microkernel starts two initial user-level components and hands control over to them. One is the aforementioned Sigma0, the second is the boot task of the L4Re userland. This component is known as Moe. In the proposed architecture, Moe is degraded into the boot process of the QM partition. In general, Moe is configured for starting the application loader Ned and provides further basic abstractions, such as namespaces (directories of named capabilities), dataspaces (containers for memory), boot file-system (a special namespace of the boot modules as dataspaces), region management (managing virtual memory within tasks), logging (multiplexing of output from applications to the microkernel), and interfacing the kernel's scheduler (core allocation and scheduling parameters). One may note, that these two services or capabilities are target for being proxied or directly handled by the partition manager to be introduced below. This may be useful as Moe could place denial-of-service attacks on the microkernels logging capability and such that the safety applications using this capability too are served very seldomly or Moe could even try to instantiate QM applications on processing cores to be exclusively used by the safety applications.

Io is configured to manage the platform's hardware peripherals, comprising I/O memory (memory for memory mapped I/O, MMIO) and interrupts. Further, it provides virtual PCI buses as well as interfaces for clients to iterate and access I/O memory and interrupts. To realize this, it maintains a global view of the system as well as a per-client view. The client view is modeled around a vbus (virtual bus) which a client can query for their peripherals.

Ned is the init process and is used as initialization component. It is started by Moe and executes a (QM partition) configuration scripot, here implemented in the Lua language. Ned sets up and starts the remainder of the L4Re system. Ned's built-in script interpreter provides access to L4Re functionalities such as starting new components and setting up their communication channels, creating resources and setting up the environment for applications.

New services can be added by implementing new components or by exploiting the ability to virtualize the processor and run entire OS and their userland applications inside virtual machines (VMs).

The boot process is initiated by a component called (Safe) Bootstrap which is started by a platform bootloader of the platform, e.g. u-boot. Bootstrap loads the binaries of the L4Re Microkernel, Sigma0 and boot task to their linked locations and makes the locations of the latter two known to the microkernel. It provides a description of the systems memory layout and then hands over control to the microkernel.

The kernel proceeds to initialize the essential hardware and internal management structures and loads root pager and boot task as described above.

Since the L4Re system was not developed according to a safety standard, it must be qualified for use in a safety-context. The ISO standard 26262, part 8 provides requirements on the qualification of pre-existing software components, which applies to the L4Re system.

A reasonable strategy for the qualification of the L4Re system according to the ISO standard 26262 is desired with the following options at hand: (a) Formal specification and verification of the L4Re system, (b) Qualification of the L4Re system as a single component and (c) Qualification of the L4Re system components separately. A more detailed assessment of each of the qualification routes follows below.

Some concepts provide for a formal specification and verification of the L4Re system Insights to the practical use of formal methods as a basis for OS kernel development. The described development process builds around a set of formal verification tool chains, where the high-level specification is transformed into an executable prototype which is subject to formal verification and tool-based transformation into C code. The following challenges were found:
- If tools used in software development can secretly introduce errors in the specifications or secretly fail to identify errors in the specifications, they may need to be qualified according to the ISO 26262. Depending on the tool impact and likelihood of identifying problems in a tool, the required effort to do so can easily become much higher by orders of magnitude compared to any effort spent for (re-)development of the target software in accordance with the ISO 26262, part 6.
- For use in a safety-context, formal verification must address all software parts that may impact a safety-related component running on the microkernel. Excluding user-space components due to their complexity is not possible.
- Safety analysis of the formal specifications on the software architecture level is still required to identify conditions that can potentially lead to violations of assumed safety requirements.
- Modeling and analysis of non-determinism as inherent to interrupt handling and concurrency is advised. For keeping the model checking problem tractable, the model and in turn the implementation needs to be kept as simple as possible. To address this, the seL4 project focused on essential parts of the system and used techniques relating to the bounded model checking approach. This clearly limits the solution space or may lead to gaps between a model and the actual implementation of a system.

For the above reasons, the formal specification is not applicable in the given context and an alternative path was developed.

Qualifying a software Safety Element out of Context consisting of a single software component impacts the safety lifecycle significantly. In particular, the following tailoring of the ISO 26262 safety lifecycle is sufficient: (a) Part 2, Safety management; (b) Part 6, Specification of software safety requirements; (c) Part 8, Supporting processes.

Missing in this tailoring are recommended methods for the specification and verification of the software architecture as well as the safety analysis on the software architecture level, which reduce the risk of unwanted behavior at run-time. According to the proposed approach the effort for safety measures of e.g., a kernel is reduced and design and verification efforts are focused on critical components of the L4Re system.

Another qualification route is to identify critical sub-components of the L4Re system through software safety requirements tracing combined with dependent failure analysis and to qualify these according to the ISO 26262, part 8. This qualification route leads to the following ISO 26262 safety lifecycle tailoring: (a) Part 2, Safety management; (b) Part 6, Specification of software safety requirements; (c) Part 6, Software architecture design; (d) Part 6, Software integration and verification; (e) Part 8, Supporting processes; (f) Part 9, Automotive safety integrity level (ASIL)-oriented and safety-oriented analyses.

This qualification route focuses re-engineering efforts to qualify software components according to the ISO 26262, part 8, clause 12 onto those components which have a clear impact on safety requirements allocated to the system. This poses the challenge to re-compose the system in such a way that freedom from interference (FFI) for individual parts can be enforced either by configuration or by implementing new components where appropriate or limiting, resp. enriching the feature set of the re-used ones. The following descriptions show that this strategy is effective for reducing the safety footprint and thus enabling a feasible certification by an external assessor. Embodiments of the proposed approach rely on this kind of qualification route.

As first step towards freedom from interference (FFI) between components, the concept of a safety and a quality managed (QM) partition is used. This means, applications of the QM partition do not contribute to any safety function. It is one goal of the proposed approach to ensure that applications from a lower ASIL do not influence applications from a partition of any higher ASIL, i.e. with higher SIL/ASIL requirements.

A partition consists of a set of tasks of the L4Re, constant sets of physical memory pages and CPU cores. The partitioning concept is based on the idea that all software executing in the safety partition is developed or qualified to the same safety level. It is assumed that safety-related applications are developed in such a way that timeout surveillance for IPC calls is not needed and that data returned from a service does not need to be checked for data corruption.

As a result, an application can safely use services by another application inside the safety partition. This strategy limits efforts with regard to ensuring FFI. What remains is the analysis and mitigation strategy for controlling potential interactions between the partitions, resp. their applications.

Embodiments of the proposed approach are directed to a method for ensuring isolation of applications with kernel-based execution environments.

Such methods comprises:
- loading and starting a kernel, here the L4Re Microkernel by a safe bootloader ("Safe Bootstrap");
- initializing relevant hardware by the kernel;
- creating internal management structures by the kernel;
- marking memory reserved for the kernel's exclusive use by the kernel;
- creating task and/or thread objects for a boot task and a root pager, mapping their expected capabilities and scheduling them, by the kernel;
- starting a partition manager 210 (Safe Application Launcher Task, "SALT") for a safety partition, wherein the partition manager is configured to serve as boot task for one or more safety applications;
- starting another partition manager (MOE, 4) for a non-safety partition, serving as boot task for non-safety applications.

A more detailed overview of the architecture according to the invention is given in the following.

Detailed safety architecture:
When running the presented kernel in a safety context, it is loaded and started by a safe bootloader. It boots in a similar fashion as traditional Bootstrap but may be reduced to a minimum functionality required to load the system and provide modules to it. In particular, the memory layout may be configured statically and the advanced features of Bootstrap such as module compression, device tree parsing, and configuration through command-line arguments may have been removed.

After being loaded and started by Bootstrap, the kernel initializes relevant hardware (e.g., interrupt controller) and creates its internal management structures such as mapping databases and kernel memory pools. The kernel marks memory it reserves for its own use as used in the Kernel Interface Page (KIP) memory descriptors such that Sigma0 will not hand it out to user applications. Subsequently, the kernel creates task and thread objects for the boot task and the root pager, maps their expected capabilities and schedules them.

The approach disclosed herein proposes for the safety partition, a separate dedicated partition manager 210 called the Safe Application Launcher Task ("SALT"). It serves as boot task to the safety applications. According to the proposed approach, SALT is launched in place of and/or prior to Moe, which is configured as boot task and abstraction provider for the non-safety-critical quality managed (QM) partition.

This comes with the advantage of not being forced to qualifying the latter. Specifically, the qualification effort would be prohibitively high. For example, Ned's Lua interpreter would require significant documentation and testing effort. On the other hand, the feature set available in SALT is significantly reduced. This is practicable, as safety functions are currently assumed to be of low complexity and are (mostly) static during run-time with respect to resource allocation. They would have limited benefit from the flexible abstractions provided by the L4Re QM applications, which are more tailored to more complex applications running in the QM partition and managing device access for multiple virtual machines.

Sigma0 initializes its memory managers for physical and I/O memory, reacts to memory mapping requests, and acts as pager for the boot task. This may imply that Sigma0 is part of the safety partition or must be qualified as safety component. Spatial freedom from interference:
SALT 210 loads predefined safety-relevant applications (Safety App 1 & Safety App 2), also referred to as "safety applications", and maps non-overlapping physical memory to each of them, thereby enforcing their isolation from another. For this, SALT 210 requests memory or a memory area for safety-relevant applications from Sigma0. The requested memory area then is provided to SALT only such that SALT can manage the requested memory area.

If there is need for exchanging data among applications, SALT facilitates this by using dedicated memory for that. To do so, the safety-relevant applications reference such memory through dedicated named sections in their Executable and Linkable (ELF) binary and SALT provides that sections with the same name receive the same physical memory. If data is to be shared with the QM partition, e.g., between the safety-relevant applications and a non-safety relevant application in the QM partition, the hand-over of the related memory pages is explicitly programmed into SALT's integrator-provided setup function, otherwise the memory is not visible to the QM partition. In this way, except for dedicated shared memory, memory-wise isolation between the applications may be achieved.

After setting up their tasks and threads SALT launches the loaded safety-relevant applications. Once they have successfully passed their initialization phase, SALT starts Moe as the boot task of the QM partition and acts as a scheduler proxy to the QM side of the system. So, according to the invention, SALT 210 receives any system call of the QM partition or an application thereof and forwards the system call to the kernel for the kernel to provide the service and does so if the system call is permitted. After starting Moe, the normal boot-up of the L4Re user space as described above, i.e., including start of IO, Ned and potential any other QM related L4Re user application. According to the proposed approach Sigma0 only allows Moe to acquire the remaining parts of the memory (only), whereas the safety partition is the owner of the memory previously mapped to SALT. Moe's scheduler capability invokes SALT. In doing so, Moe may send a system call to SALT. According to privileges of the QM partition and applications therein, SALT restricts requests to schedule a thread to cores not occupied by safety-relevant applications. Accordingly, SALT determines that a non-safety relevant application of the safety partition is privileged to use the same (processing) core as the safety-relevant application or safety partition. Consequently, SALT does not forward such system calls Otherwise, if the system call requests a service that is allowed to the non-safety relevant application, e.g., that a thread of it is scheduled to a core available for the QM partition, SALT forwards the system call to the kernel such that the kernel provides the service to the non-safety relevant application. So, SALT can be seen as a proxy for the communication with the kernel.

Similarly, SALT manages IPC and memory. In practice, e.g., Device memory requests, i.e., memory allocation requests for letting QM applications communicate with devices may need also to be routed through SALT to avoid unintended sharing with a safety-relevant application. Once again, SALT acts as a proxy for these kind of system calls, resp. IPC service requests. This time, the request is routed to sigma0 and not the kernel. In case the access to a device is not foreseen, SALT rejects the forwarding.

So, to summarize, SALT acts as a proxy in the communication with the kernel or another owner of a service to request services. In doing so, any kind of service of the kernel or an application to be isolated from QM applications is provided.

Alternatively, SALT may enable the service itself. For example, SALT may be capable to allocate memory for IPC to the partitions, too. For this, SALT may provide information on such memory, e.g., information on pages, to the applications. In doing so, SALT may ensure memory-wise isolation, except from memory areas intended to be shared between the safety and QM partition or their applications, respectively.

In this way, (spatial) freedom from interference may be achieved. Spatial freedom from interference (sFFI) is based on the following properties:
Isolation of private memory: No fault in any software in the QM partition can cause the program state of any software in the safety partition to change, with the exception of explicitly shared memory.

No starvation on memory allocation: The applications of the safety partition will always be able to allocate enough memory, i.e., the safety-relevant applications will not experience starvation on memory allocation requests.

No out-of-memory scenarios of the kernel: The kernel will always be able to allocate objects that safety-relevant applications require.

In the following paragraphs it is explained that these properties hold in implementations according to the invention.

A state of a task of the L4Re may be defined by content of its memory, its capabilities as maintained by the kernel and its threads' execution contexts. To ensure sFFI the following is looked at: (a) absence of unintended memory manipulation, (b) protecting access to a task's capabilities and (c) correct context switching.

By ensuring that neither application of the safety partition, nor the kernel erroneously give access to the task's capabilities, item (b) is met. For safety tasks, the property may be enforced by coding guidelines and peer-review. For the kernel, it is enforced by the applied software qualification measures (static analysis, design documentation, inspection, requirement-based testing).

Item (c) may be ensured by verifying that the microkernel correctly handles thread contexts, which once again can be established by the software qualification measures as applied for the qualification of the microkernel.

A solution for item (a) which is discussed in the following.

Virtual memory: Each task is given a virtual memory address space which limits the physical memory its threads can access. The threads of a task can only access physical memory which has first been mapped into its address space. This is the core feature upon which memory isolation is built. It is ensured by qualification measures that the physical memory of a task is never mapped unintentionally into the virtual address space of another task. The only exception to this is the intentional sharing of memory to exchange data between applications. This property is ensured by the microkernel as long as a task with access to a physical memory page does not erroneously hand it out to different clients.

Single ownership for private memory: To limit access to non-shared physical memory to a single application Sigma0, which as the root of the memory hierarchy has access to all memory, is configured to not allocate any memory region already mapped to a safety application to another client, e.g., the non-safety relevant application. By handing out memory regions only to the first client (e.g., safety-relevant application) requesting access to them and tracking this ownership Sigma0 ensures that no memory is handed out to two clients (applications) at the same time. Clients are identified by the label of the capability they use to access Sigma0. SALT partitions the memory by requesting all needed memory on behalf of the safety applications (during startup). This includes memory explicitly shared between tasks of the safety partition and with tasks of the QM partition.

Afterwards SALT requests Sigma0 to create a new client capability that it then passes on to Moe as the boot task of the QM partition. This allows Sigma0 to identify Moe as a different client. As memory mapping requests from the QM partition only occur after SALT has requested all of the memory needed by the safety-relevant applications, isolation on private memory of the safety partition may be ensured.

Due to this construction Sigma0 is a safety application which handles IPC requests from QM applications. This creates the potential for a kind of denial of- service attack on safety applications the threads of which are running on the same core as Sigma0, necessitating further restrictions as presented below.

Temporal freedom from interference (tFFI) means that any error in any QM application cannot interfere with the timing behavior of applications in the safety partition. E.g., any undetected delay in an IPC response from a QM application shall not result in an unmonitored deadline violation. Achieving tFFI, however, depends in many parts on the used hardware. For example, invalidation of a shared cache by a faulty QM application changes the cache miss rate and easily increases the load on the memory bus prolonging the execution times of safety applications in an unforeseen way. Due to the high dependency of SW-based solutions to such problems and the underlying hardware, tFFI is commonly reduced to guarantees relating to the software. For maintaining the generic character of the proposed approach, this strategy is followed as follows.

To achieve tFFI at application level, the embodiment is configured for following properties:
1. Exclusive mapping of cores to safety-relevant applications. That is, one or more (processing cores) are exclusively reserved for the safety-relevant applications. For this, SALT is configured to refuse system calls that allow or cause any non-safety relevant application to use the same core as any safety-relevant application.
2. Independence of execution by
   (a) restricted IPC relation and
   (b) static allocation of resources to safety partition.
   For this, SALT is configured to refuse any IPC relation (for communication between applications) except from explicitly intended IPC relations and to allocate resources (e.g. memory, processing cores, and/or other resources) statically, i.e., such that this do not change dynamically during operation.

This is justified as follows:
Exclusive mapping of cores to safety applications: Allowing threads of both the QM and safety partition to run on a core can lead to CPU time stealing. The responsiveness of a safety application running on the affected CPU may be reduced whenever less CPU time than expected is available. Possible causes are: i) IPC-induced CPU time stealing, and ii) Memory mapping induced CPU time stealing.

IPC-induced CPU time stealing: When an L4Re application acts as a server, IPC requests sent to it are directed to the core the receiver thread is running on. In case the receiver is not ready for serving the request immediately, the IPC is queued and the IPC initiator (e.g., any safety-relevant application) is blocked. Each time a thread of a QM application invokes this server through an IPC request the currently running thread on the core is preempted and the kernel either queues the IPC or schedules the receiver thread for serving it immediately. With a large number of IPC requests directed towards a low priority QM thread, significant CPU time would be spent on IPC queuing, instead of being available for safety-relevant applications scheduled on that core.

Memory mapping induced CPU time stealing: When memory mappings are altered, cores running threads of the affected task must be informed to enforce the new mapping. To do so an inter-processor interrupt (IPI) is sent to the relevant cores interrupting their currently running threads. Excessive mapping and unmapping of memory yields CPU time stealing as CPU time is spent for the IPI handler rather than for safety functions.

For suppressing the above scenarios, threads of the QM partition and the safety partition must not share a core. This is enforced by configuration. In addition, SALT serves as scheduler proxy to the QM partition such that the root task of the QM partition cannot instruct the kernel to migrate a QM thread of a QM application to a core exclusively mapped to any safety-relevant application. This together with Sigma0 gives two applications of the safety partition which, besides the kernel itself, serve IPC requests for QM applications at run-time.

Independence of execution: Each server application can be contacted by applications which have the respective capability. IPCs block until the IPC request has been delivered. However, for each task any thread can execute a new IPC request even if earlier invocations of the capability by other threads are still blocked. Consequently, a faulty QM application may instantiate a large number of threads, each placing an IPC request on an application it holds a capability to. This can induce the aforementioned CPU time stealing.

To avoid such scenarios, according to the invention it may be forbidden that safety applications act as servers to QM applications. A QM thread may reply to IPC calls by a safety application but cannot hold a capability to directly communicate with it. An exception to this are the kernel, Sigma0, and SALT. These applications potentially act as servers or proxies to QM applications.

With theL4Re microkernel, this does not pose a problem, as it is only invoked on the core the corresponding IPC request was issued on, otherwise this needs to be enforced.

With L4Re the IPC requests placed on Sigma0 and SALT are directed to the core(s) they are running on. As a large number of IPC requests placed by QM applications on them would result in unaccounted CPU time stealing. To avoid this scenario, the proposed pattern requests to configure the system such that Sigma0 and SALT are configured to not share any core with other safety applications. Due to the statically mapping of memory to the safety applications, the latter will not submit any IPC request towards Sigma0 or SALT once SALT has started. This way, it is ruled out that safety applications experience unexpected delays in their execution. Interfering IPC requests simply do not occur by system configuration and in accordance with the proposed approach.

Handling of physical devices via a proxy to sigma0:
Drivers to the physical devices are hosted inside user applications which act as device server. Device services are provided through IPC or shared memory. HW-rooted isolation and protection mechanisms for device usage are offered by hardware vendor specific IP blocks, such as LifeC by Renesas, XRDC by NXP, or via I/O memory management units (IOMMUs) such as the system memory management unit (SMMU) by ARM. The availability of HW-rooted isolation mechanism allows to ensure sFFI with DMA-capable devices (DMA = direct memory access), as their memory accesses may need to be restricted when operated by QM-partition rooted device servers.

It is also proposed that interrupt routing may be configured, and functions as expected, i.e. device interrupts are delivered to the configured core. This rules out that a device server in the QM partition can generate interrupts delivered to a core running safety applications. The absence of storms of device interrupts caused by device servers running in the safety application is ensured by software design guidelines and quality assurance measures such as static analysis and requirements-based testing.

For the device server, three scenarios are considered: clients accessing the server are (a) exclusively safety applications, (b) exclusively QM-applications and (c) from both partitions. Scenario (a) and (b) are in adherence with the requested restriction imposed on the IPC relation, provided the (device) server is part of the same partition as its clients. With scenario (c), the restrictions postulated for the IPC relation so far appears to be too restrictive as the mixed case would simply be ruled out by configuration. As one may recall, it is requested that a safety application which acts as server for any QM application and is reachable via IPC means from QM side must not execute on the same core as any other safety application. This is irrespective of the application being additionally used by safety applications or exclusively by QM applications. For easing this constraint, the following is requested:
1. A device server located in the safety partition serving clients from the QM partition operates in polling mode when serving QM clients. No IPC service requests from QM side are allowed other than using a reply capability. A reply capability is a one-shot mechanism, where an application can only use the offered capability once and only if the capability is granted o it. The use of a polling period enforces an upper bound on the workload injected by the QM clients and rules out unexpected situations of overload.
2. A device server located in the QM partition may serve both clients from the QM and the safety partition. The clients from the safety partition must implement timeout surveillance when placing an IPC request on the device server. Furthermore, they do not rely on the result of that service.

The above refinement allows to run device servers on both partitions. Further aspects and features in connection with sFFI with regard to I/O memory is laid out in more detail below. Unlike with physical memory, Sigma0 may not track ownership for I/O memory.

As proposed, Sigma0 may ensure that allocations do not fail when sufficient memory of the requested type is available. Tracking ownership of memory regions requires a book-keeping facility. Allocation requests for I/O memory may lead to a RAM allocation when a new entry in the management structure is required.

Potentially, Sigma0 could run out of its own internal memory and reject the mapping with an out-of-memory error, breaking the assumed protocol for device memory allocation and the assumption that allocation requests from safety applications never fail.

For maintaining the interface specification for QM applications whilst guaranteeing sFFI, it is proposed that a proxy for the pager hierarchy root is provided. The partition manager SALT is a possibility to implement this proxy functionality or any other safety application which owns the sigma0 capability handed out to the QM application lo.

The proxy, e.g., SALT, gets a list of I/O memory regions mapped to safety tasks, i.e., tasks of safety-relevant applications. As all I/O memory used by safety applications is mapped during startup, the list is effectively static. Consequently, safety applications do not request I/O memory themselves after startup. The proxy relays mapping requests of QM applications to Sigma0 and rejects requests for I/O memory regions overlapping with ones claimed by safety applications. As no ownership is tracked by Sigma0, no memory allocations are required and QM requests for I/O memory will never fail due to an out-of-memory error. This maintains the previously mentioned allocation guarantee. The proxy is configured to avoid using a core mapped to the safety applications to ensure tFFI.

This is another example of the system call filtering or IPC proxying which a dedicated partition manager like SALT can implement.

In the described exemplary embodiment of the present disclosure, it is presented a concept to certify the pre-existing open-source microkernel-based hypervisor L4Re according to ISO 26262 for automotive safety, targeting ASIL-B. The presented concept builds a foundation for mixed-criticality systems, which is enabled by the implementation of components to support partitioning and re-organization of the boot process to prevent possible interference.

This approach avoids re-implementation of the complete L4Re system, keeping the re-engineering effort lower than for a complete re-implementation, and prevents unnecessary re-certification due to local changes to the QM partition. The compositional design of L4Re supports extending safety concept when the safety partition is further developed.

Certification is carried out in adherence to ISO 26262 and targets an Automotive Safety Integrity Level B (ASIL-B). Unlike existing work on OS verification, based on the presented inventive example it is disclosed how a complete software system can be taken to certification.

Overall, the present disclosure proposes a solution for the re-use of open-source legacy software in a safety context and provides strategies for its certification without re-implementing major parts of the system. To achieve this, the inventive concept introduces a new safety architecture based on system call filtering or L4 style of "system-call forwarding", in addition to memory ownership tracking hierarchical memory management and configuration-based setup of inter-process communication relations. Collectively, the proposed innovations isolate safety applications from hidden errors in components not developed in adherence to the ISO 26262, in this case the feature-rich software stack implementing the L4Re userland. So, according to the proposed software architecture, The Safe Bootstrap, SALT, and the safety-relevant applications may be developed in accordance with requirements for a certain SIL, e.g., ASIL B to comply with ISO 26262. Apart from that, (L4Re micro)kernel, and the memory tracking component, e.g., Sigma0 also complies with ASIL B to meet requirements of ISO 26262. However, the QM partition which makes the residual system, e.g., Moe, Ned, lo, and/or other QM applications do not need to adhere to a certain SIL to comply with desired safety and security requirements. As shown, the QM partition and the respective components and applications may only adhere to ASIL QM as the isolation criteria for coexistence of SW of different ASIL are met by the proposed approach.

To summarize, present disclosure particularly introduces a safety architecture for OS kernel-based execution environments. The proposed concept is based on "system-call filtering" or IPC forwarding, hierarchical memory management and configuration-based setup of inter-process communication relations for modern microkernel-based execution environments. It allows one to establish a safety island or safety partitions or multiple instances thereof on top of a OS-kernel and along with its execution environment. Collectively, the safety architecture and proposed configuration isolates a so-called "safety island" from errors or attacks in components residing outside the safety island. These are, e.g., components of other safety islands or parts of the feature-rich software implementing the standard userland to the OS and which is commonly only made of untrusted, quality managed SW.

The proposed concept is based on the assumption that safety-relevant applications of the safety island are given a dedicated memory region it owns exclusively. E.g., by virtualizing the physical address space. The threads of a task can only access physical memory which has first been mapped to it. This is the core feature upon which memory isolation of programs is built. It is ensured by the OS-kernel itself that the physical memory of a protection domain is never mapped unintentionally to another protection domain as long as the OS-kernel is a trustworthy piece of SW. The only exception to this is the intentional sharing of memory to exchange data between protection domains. This property is ensured by the OS-kernel and as long as a protection domain with access to a physical memory page does not erroneously hand it out to different protection domains. The latter aspect may be ensured by requesting that the latter applications are safety qualified too.

To limit access to non-shared physical memory to a single application it is proposed using a SW component (Sigma0). This component could be either reside inside the OS-kernel or outside as an application and as mandated by a microkernel-based style of an OS. This component, e.g., Sigma0 is the root of the memory hierarchy and has access to all physical and device memory. The proposed approach suggests that this component, the owner of all physical memory, is configured to not hand out any memory region already mapped to another application. This allows to form protection domains or safety island. By handing out memory pages only to the first client (application) requesting access to them and tracking this ownership this component ensures the requested memory partitioning. and may guarantee that no memory is handed out to two clients (applications) at the same time. Clients are identified by a label of the method they invoke when calling the aforementioned component.

With the proposed pattern, another component or partition manager, e.g., SALT, is requested which becomes the boot component of the system. In some embodiments, there are multiple safety partitions and one partition manager, e.g., one instance of the partition manager per safety island. So, in some implementations, a first memory area of the memory is mapped to a first safety partition and a second area is mapped to a second safety partition. In practice, the mapping of the second memory area may be done by the same or another partition manager. In doing so, it may be ensured that the first and the second memory do not overlap for memory-wise isolation of the safety partitions.

In other words, each instance of the partition manager may request the memory (area) for its island (partition) and maps the requested memory to each program of its (safety) island. This may include memory to be explicitly shared between tasks of the safety island and with tasks of other islands or the QM partition. Afterwards partition manager requests the memory-owning component (Sigma0) to create a new client call reference that it then passes on to another partition manager or boot task of another safety island or the QM partition. This allows Sigma0 to identify the partition manager instance responsible for a respective safety island or the QM partition.

Limiting ownership to a non-shared physical memory page to a single client means that the owner of all physical memory, e.g., Sigma0, does not hand-out any page already mapped to a safety island. This is achieved as follows: Sigma0 inherits all physical memory from the microkernel at startup. It hands out each page in a comes-first-served-first style. By ownership tracking, it is ensured that Sigma0 does not hand out a memory page to two clients at the same time. It is proposed that the partition manager requests (all) memory or corresponding memory mappings from Sigma0 on behalf of the safety island the respective partition manager instance belongs to, including the pages to be shared between tasks of different partitions. As memory mapping requests from the next instance of the partition manager or the boot component of the QM partition only occurs once the precedingly executing instance of the partition manager has requested all of the memory for the use by its safety island, isolation on private memory of the safety partition is ensured.

For (handling) devices, in practice, may be accessed via MMIO. Once again, ownership of I/O memory inside the global memory mapping component is tracked, e.g., Sigma0 or one may defer this to the partition manager. For this, a first partition manager may be configured to act as a proxy for another second partition manager to the next partition, e.g., the QM partition and with respect to the I/O memory. In such a setup, the second partition manager or the partition's device manager can (only) go through the preceding first partition manager (SALT) when requesting access to specific device memory. In the L4Re example, Moe could be such a QM partition manager and Io could be the device manager. In this way it is strictly controlled by the partition manager of the next higher safety island which partitions owns which device and a successor stage cannot falsely request ownership for I/O memory already mapped to another, higher-level safety island.

Due to this construction, mapping requests encapsulated as IPC requests from outside a safety island can reach the respective partition manager instance as well as the memory managing component (Sigma0). This creates the potential for a kind of denial-of-service attack on programs of a safety island the threads of which are running on the same core as the partition manager or the memory managing component. To avoid this, restrictions in the IPC relation among islands, as well as in the core to island mapping, may be provided.

It is proposed that a general configuration of the execution environment is configured as follows:
(1) Exclusive mapping of cores to islands/partitions such that threads of different safety islands or the QM partition do not share any core. An exception to this are the partition manager and the memory owning component, here SALT and Sigma0. Sigma0 may be configured to run on a core of the QM partition and SALT may be configured to run on a core of a respective succeeding safety island and own the I/O memory for the succeeding safety island. In this construction SALT is a trustworthy component.
(2) Independence of execution by
   (i) restricted IPC relation and
   (ii) static allocation of resources to safety islands.

In a OS-kernel setup with a synchronous call semantics which is referred to here, a server program can be contacted by an application which have the respective capability, i.e., the respective calling reference. IPCs block until the IPC has been delivered to the sever program. However, for tasks any thread can execute a new IPC request even though earlier invocations of the capability by other threads are still blocked. Consequently, a faulting QM application may instantiate an unknown number of threads, each placing an IPC request on a safety application, it holds a capability to. To avoid such scenarios, the pattern generally forbids that safety-relevant applications act as servers to applications residing outside the safety island, e.g., the non-safety relevant applications. A QM thread may reply to IPC calls from a safety island but cannot hold a capability to directly communicate with it. An exception to this are the OS-kernel, memory managing component and the partition manager, e.g., Sigma0 and the SALT instance which invoked the QM partition. These applications potentially act as servers or proxies to QM applications. With the microkernel, this does not pose a problem, as it is only invoked on the core, the corresponding IPC request was issued on. For Sigma0 and SALT the IPC request is directed to the core(s) they are running on. As a result, a large number of IPC requests placed by QM applications on them results in unaccounted CPU time stealing. To avoid this scenario, Sigma0 and SALT are configured to not share any core with another safety island, unless the respective instance of SALT is only called by the succeeding SALT instance.

It is proposed that memory is statically mapped to the safety island(s) such that the applications of a safety island will never place any IPC request towards Sigma0 or SALT once they have been successfully started by their SALT instance. This way, the pattern rules out that a safety island experience unexpected delays. The respective IPC requests for memory simply do not occur by construction.

According to the present disclosure it is proposed:
(1) A device server located in the safety partition serving clients from the QM partition is configured to operate in polling mode when serving QM clients. No IPC service requests from QM side are allowed other than using a reply capability. The use of a polling period enforces an upper bound on the workload injected by the QM clients and rules out unexpected situations of overload.
(2) A device server located in the QM partition may serve both clients from the QM and the safety island. The clients from the safety partition must execute timeout surveillance when placing an IPC request on the device server. Furthermore, they the safety-relevant applications are configured such that they do not rely on the result of that service.

The above refinement allows to run device servers on both partitions. Freedom from interference on device memory is already ruled out through the proxy functionality of SALT, as laid out in more detail below with reference to Fig. 2b.

An illustration to the proposed pattern, and especially to the "system call filtering" or IPC proxying is provided in Fig 2b.

Fig. 2b shows a block diagram schematically illustrating the proxy function of SALT 210 and relates to an embodiment of the innovation with L4Re..

As can be seen from the safety-related and non-safety-related applications may both make critical and uncritical system calls, i.e., systems calls that potentially pose a risk to the FFI.

Any safety-relevant application, e.g., may make a critical system call by requesting device or I/O memory or a corresponding mapping while it may be seen uncritical when the safety-relevant application makes a system call for writing log messages to a kernel buffer. Any non-safety relevant application may make a critical system call by requesting to migrate one or more of its threads to another processing core while it may be seen uncritical when it requests to map memory reserved for the QM partition to it.

It is proposed that SALT 210 is configured to act as proxy at least for the critical system calls. In doing so, SALT 210 is able to check if the application is allowed to a service requested by the system call. In doing so, SALT 210 filters system calls in the communication between the applications and the kernel. So, SALT 210 is configured to receive at least the critical system calls from the applications, check whether the application is allowed to the service requested by the system call, and, if so, forward the system call to the OS-kernel.

The uncritical system calls may be communicated directly between the applications and the kernel without SALT 210 acting as proxy.

As well, SALT 210 is configured to act as proxy for communication from the kernel to the applications. In doing so, SALT 210 may not only "proxy" IPC from the applications to the kernel but also from the kernel back to the applications. In doing so, SALT 210 may cause the kernel to provide the requested IPC or IPC relation. So, in this case, the requested service of IPC is provided by the kernel. In some cases, SALT 210 may directly provide the memory for the IPC to the requesting application. So, the service may be also provided by SALT 210 directly. In doing so, establishing an IPC connection comprises that SALT 210 provides the application with information on an IPC memory area for exchanging data as part of the IPC.

It should be noted that the service can be any service of operating systems and is not limited to IPC. Other exemplary services comprise migration of threads and/or the like. Similarly, the proposed approach can be applied for various applications, standards, safety requirements, and/or hardware setups (e.g., different (kinds of) kernels).

Apart from that, SALT 210 is configured to allocate memory and device or I/O memory used in the safety partition, and to hand over devices and memory shared with the QM partition to its root task, e.g., Moe (see above).

Further, SALT 210 may be configured to track ownership of memory pages for the safety-relevant application and the non-safety-relevant application(s).

Advantages of the proposed approach for example: The proposed approach creates safety islands with minimal/reduced impact in any microkernel-based execution environment with recursive memory ownership. Software components executing in the safety island are not experiencing any error propagation from the software components residing outside the safety island.

The presented approach leverages IPC forwarding, static memory partitioning between safety and quality-managed (QM) applications and restriction of IPC in a way that avoids denial-of-service scenarios directed from QM applications towards safety ones. In this way, a safety partition is designed with minimal impact and it is shown why software components executing in the safety partition are not experiencing any (hidden) error propagation from the feature-rich QM software components the userland of an OS is commonly made of. This differs from traditional strategies which commonly rely on exhaustive monitoring of relevant safety features.

As explained, the proposed approach may be implemented in a software architecture. So, embodiments may also provide a computer program comprising instructions which, when the computer program is executed by a computer, cause the computer to carry out the proposed method.

As well, the proposed approach can be implemented in an apparatus, as laid out in more detail below with reference to Fi. 3.

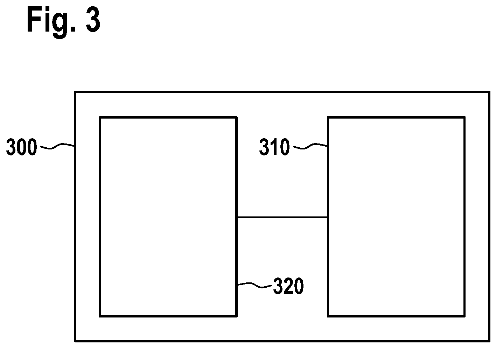

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is (part or a component of) an electronic control unit (ECU) for a vehicle.

However, the skilled person will appreciate that the proposed approach may be also implemented in various applications (other than automotive applications) as well.

## Claims

1. A method (100) for a kernel and for executing at least one safety-relevant application and at least one non-safety-relevant application, wherein the safety-relevant application adheres to a higher safety integrity level than the non-safety relevant application, the method (100) being carried out by a partition manager for the kernel, wherein the partition manager serves as boot task for the safety-relevant application, and wherein, after the safety-relevant application has successfully passed an initialization phase, a boot task of a non-safety partition is started, the method (100) comprising:
receiving (110), by the partition manager for the kernel, from the non-safety-relevant application or the boot task of the non-safety partition a system call for a service;
checking (120), by the partition manager, if the service is permitted to the non-safety-relevant application, wherein checking comprises determining whether the requested service would result in use of a processing core dedicated to the safety-relevant application or in access to memory dedicated to the safety-relevant application, except for an explicitly shared memory area; and
providing (130) the service to the non-safety-relevant application if the service is permitted to the non-safety-relevant application, wherein providing the service to the non-safety-relevant application comprises forwarding the system call to the kernel for the kernel to provide the service.

2. The method (100) of claim 1, wherein the method (100) further comprises tracking, by the partition manager or a separate memory managing component, ownership of memory pages for the safety-relevant application and the non-safety-relevant application(s).

3. The method (100) of claim 1 or 2, wherein checking if the service is permitted to the application comprises:
obtaining information on service privileges of the application and information on the service; and
comparing the information on the service privileges and the information on the service to check if the service is permitted to the application.

4. The method (100) of any one of the preceding claims, wherein the service call includes an inter-process communication IPC, request, and wherein providing the service to the application comprises establishing the IPC.

5. The method (100) of claim 4, wherein establishing the IPC comprises forwarding, by the partition manager, the IPC request to the kernel for the kernel to establish an IPC connection for the IPC.

6. The method (100) of claim 4, wherein establishing the IPC comprises providing the application with information on an IPC memory area for exchanging data as part of the IPC.

7. The method (100) of any one of the preceding claims, wherein the method (100) further comprises:
obtaining, by the partition manager, memory for applications from the memory management component; and
mapping, by the partition manager, a first memory area of the memory to a safety partition for the safety-relevant application; and
mapping, by another or the same partition manager, a second memory area of the memory to one or more other safety or non-safety partitions for another safety or non-safety-relevant applications, wherein the first and the second memory area do not overlap besides an explicitly shared memory area, if such a shared memory is provided.

8. The method (100) of claim 7, wherein the method (100) comprises determining, by the partition manager, the second memory area in consideration of the first memory area and providing the second memory area to the other partition manager or itself

9. The method (100) of claim 6 or 7, wherein the method (100) further comprises allocating one or more memory areas to another partition manager for one or more safety and non-safety-relevant applications which shall be isolated from another and previously defined memory areas.

10. A computer program comprising instructions which, when the computer program is executed by a computer, cause the computer to carry out the method (100) of any one of the preceding claims.

11. An apparatus (300) comprising:
one or more interfaces (310) for communication; and
a data processing circuit (320) configured to execute the method (100) of any one of the claims 1 to 9.

12. A vehicle comprising the apparatus (300) of claim 11.

## Patentansprüche

1. Verfahren (100) für einen Kernel und zur Ausführung mindestens einer sicherheitsrelevanten Anwendung und mindestens einer nicht sicherheitsrelevanten Anwendung, wobei die sicherheitsrelevante Anwendung einem höheren Sicherheitsintegritätsniveau als die nicht sicherheitsrelevante Anwendung angehört, wobei das Verfahren (100) von einem Partitionsmanager für den Kernel ausgeführt wird, wobei der Partitionsmanager als Boot-Task für die sicherheitsrelevante Anwendung dient und wobei, nachdem die sicherheitsrelevante Anwendung eine Initialisierungsphase erfolgreich durchlaufen hat, ein Boot-Task einer nicht sicherheitsrelevanten Partition gestartet wird, wobei das Verfahren (100) umfasst:
Empfangen (110), durch den Partitionsmanager für den Kernel, von der nicht sicherheitsrelevanten Anwendung oder dem Boot-Task der nicht sicherheitsrelevanten Partition, eines Systemaufrufs für einen Dienst;
Überprüfen (120), durch den Partitionsmanager, ob der Dienst für die nicht sicherheitsrelevante Anwendung zulässig ist, wobei das Überprüfen das Bestimmen umfasst, ob der angeforderte Dienst die Verwendung eines der sicherheitsrelevanten Anwendung gewidmeten Verarbeitungskerns oder den Zugriff auf den der sicherheitsrelevanten Anwendung gewidmeten Speicher zur Folge hätte, mit Ausnahme eines explizit gemeinsam genutzten Speicherbereichs; und
Bereitstellen (130) des Dienstes für die nicht sicherheitsrelevante Anwendung, wenn der Dienst für die nicht sicherheitsrelevante Anwendung zulässig ist, wobei das Bereitstellen des Dienstes für die nicht sicherheitsrelevante Anwendung das Weiterleiten des Systemaufrufs an den Kernel umfasst, damit der Kernel den Dienst bereitstellen kann.

2. Verfahren (100) nach Anspruch 1, wobei das Verfahren (100) ferner die Verfolgung des Besitzes von Speicherseiten für die sicherheitsrelevante Anwendung und die nicht sicherheitsrelevante(n) Anwendung(en) durch den Partitionsmanager oder eine separate Speicherverwaltungskomponente umfasst.

3. Verfahren (100) nach Anspruch 1 oder 2, wobei das Überprüfen, ob der Dienst für die Anwendung zulässig ist, Folgendes umfasst:
Erhalten von Informationen über die Dienstberechtigungen der Anwendung und Informationen über den Dienst; und
Vergleichen der Informationen über die Dienstberechtigungen und der Informationen über den Dienst, um zu überprüfen, ob der Dienst für die Anwendung zulässig ist.

4. Verfahren (100) nach einem der vorhergehenden Ansprüche, wobei der Dienstaufruf eine Interprozesskommunikationsanforderung (IPC-Anforderung) einschließt und wobei das Bereitstellen des Dienstes für die Anwendung das Herstellen der IPC umfasst.

5. Verfahren (100) nach Anspruch 4, wobei das Herstellen der IPC das Weiterleiten der IPC-Anforderung durch den Partitionsmanager an den Kernel umfasst, damit der Kernel eine IPC-Verbindung für die IPC herstellt.

6. Verfahren (100) nach Anspruch 4, wobei das Herstellen der IPC das Bereitstellen von Informationen über einen IPC-Speicherbereich für die Anwendung zum Datenaustausch als Teil der IPC umfasst.

7. Verfahren (100) nach einem der vorhergehenden Ansprüche, wobei das Verfahren (100) ferner Folgendes umfasst:
Erhalten, durch den Partitionsmanager, von Speicher für Anwendungen von der Speicherverwaltungskomponente; und
Zuordnen eines ersten Speicherbereichs des Speichers zu einer Sicherheitspartition für die sicherheitsrelevante Anwendung durch den Partitionsmanager; und
Zuordnen eines zweiten Speicherbereichs des Speichers zu einer oder mehreren anderen Sicherheits- oder Nicht-Sicherheitspartitionen durch einen anderen oder denselben Partitionsmanager für andere sicherheitsrelevante oder nicht-sicherheitsrelevante Anwendungen, wobei sich der erste und der zweite Speicherbereich außer einem explizit gemeinsam genutzten Speicherbereich nicht überschneiden, sofern ein solcher gemeinsam genutzter Speicher bereitgestellt wird.

8. Verfahren (100) nach Anspruch 7, wobei das Verfahren (100) das Bestimmen des zweiten Speicherbereichs durch den Partitionsmanager unter Berücksichtigung des ersten Speicherbereichs und das Bereitstellen des zweiten Speicherbereichs für den anderen Partitionsmanager oder sich selbst umfasst.

9. Verfahren (100) nach Anspruch 6 oder 7, wobei das Verfahren (100) ferner das Zuweisen eines oder mehrerer Speicherbereiche zu einem anderen Partitionsmanager für eine oder mehrere sicherheitsrelevante und nicht sicherheitsrelevante Anwendungen umfasst, die von anderen und zuvor definierten Speicherbereichen isoliert sein sollen.

10. Computerprogramm, umfassend Anweisungen, die, wenn das Computerprogramm durch einen Computer ausgeführt wird, den Computer veranlassen, das Verfahren (100) nach einem der vorhergehenden Ansprüche durchzuführen.

11. Einrichtung (300), umfassend:
eine oder mehrere Schnittstellen (310) zur Kommunikation; und
eine Datenverarbeitungsschaltung (320), die ausgebildet ist, um das Verfahren (100) nach einem der Ansprüche 1 bis 9 auszuführen.

12. Fahrzeug, umfassend die Einrichtung (300) nach Anspruch 11.

## Revendications

1. Procédé (100) pour un noyau et pour l'exécution d'au moins une application pertinente en matière de sécurité et d'au moins une application non pertinente en matière de sécurité, dans lequel l'application pertinente en matière de sécurité respecte un niveau d'intégrité de sécurité supérieur à celui de l'application non pertinente en matière de sécurité, le procédé (100) étant mis en œuvre par un gestionnaire de partition pour le noyau, dans lequel le gestionnaire de partition sert de tâche de démarrage pour l'application pertinente en matière de sécurité, et dans lequel, après que l'application pertinente en matière de sécurité a réussi une phase d'initialisation, une tâche de démarrage d'une partition non liée à la sécurité est lancée, le procédé (100) comprenant :
la réception (110), par le gestionnaire de partition du noyau, de l'application non pertinente en matière de sécurité ou de la tâche de démarrage de la partition non liée à la sécurité, d'un appel système pour un service ;
le fait de vérifier (120), par le gestionnaire de partition, si le service est autorisé à l'application non pertinente en matière de sécurité, dans lequel la vérification comprend le fait de déterminer si le service demandé entraînerait l'utilisation d'un cœur de traitement dédié à l'application pertinente en matière de sécurité ou l'accès à une mémoire dédiée à l'application pertinente en matière de sécurité, à l'exception d'une zone de mémoire partagée explicitement ; et
la fourniture (130) du service à l'application non pertinente en matière de sécurité si le service est autorisé à l'application non pertinente en matière de sécurité, dans lequel la fourniture du service à l'application non pertinente en matière de sécurité comprend le transfert de l'appel système au noyau pour que le noyau fournisse le service.

2. Procédé (100) selon la revendication 1, dans lequel le procédé (100) comprend en outre le suivi, par le gestionnaire de partition ou un composant de gestion de mémoire distinct, de la propriété des pages de mémoire pour l'application pertinente en matière de sécurité et l'application / les applications non pertinentes en matière de sécurité.

3. Procédé (100) selon la revendication 1 ou 2, dans lequel la vérification de l'autorisation du service pour l'application comprend :
l'obtention des informations sur les privilèges de service de l'application et des informations sur le service ; et
la comparaison des informations sur les privilèges de service et des informations sur le service lui-même afin de vérifier si le service est autorisé pour l'application.

4. Procédé (100) selon l'une quelconque des revendications précédentes, dans lequel l'appel de service comporte une requête de communication interprocessus, IPC, et dans lequel la fourniture du service à l'application comprend l'établissement de l'IPC.

5. Procédé (100) selon la revendication 4, dans lequel l'établissement de l'IPC comprend la transmission, par le gestionnaire de partition, de la requête IPC au noyau pour que le noyau établisse une connexion IPC pour l'IPC.

6. Procédé (100) selon la revendication 4, dans lequel l'établissement de l'IPC comprend la fourniture à l'application d'informations sur une zone de mémoire IPC pour l'échange de données dans le cadre de l'IPC.

7. Procédé (100) selon l'une quelconque des revendications précédentes, dans lequel le procédé (100) comprend en outre :
l'obtention, par le gestionnaire de partition, de la mémoire pour les applications auprès du composant de gestion de mémoire ; et
le mappage, par le gestionnaire de partition, d'une première zone mémoire de la mémoire vers une partition de sécurité pour l'application pertinente en matière de sécurité ; et
le mappage, par un autre ou le même gestionnaire de partition, d'une seconde zone mémoire de la mémoire vers une ou plusieurs autres partitions liées à la sécurité ou non liées à la sécurité pour d'autres applications pertinentes en matière de sécurité ou non pertinentes en matière de sécurité, dans lequel la première et la seconde zone mémoire ne se chevauchent pas, à l'exception d'une zone mémoire partagée explicitement, si une telle mémoire partagée est fournie.

8. Procédé (100) selon la revendication 7, dans lequel le procédé (100) comprend la détermination, par le gestionnaire de partition, de la seconde zone mémoire en tenant compte de la première zone mémoire, et la fourniture de la seconde zone mémoire à l'autre gestionnaire de partition ou à lui-même.

9. Procédé (100) selon la revendication 6 ou 7, dans lequel le procédé (100) comprend en outre l'allocation d'une ou de plusieurs zones de mémoire à un autre gestionnaire de partition pour une ou plusieurs applications pertinentes en matière de sécurité et non pertinentes en matière de sécurité qui doivent être isolées d'autres zones de mémoire précédemment définies.

10. Programme informatique comprenant des instructions qui, lorsque le programme informatique est exécuté par un ordinateur, amènent l'ordinateur à mettre en œuvre le procédé (100) selon l'une quelconque des revendications précédentes.

11. Appareil (300) comprenant :
une ou plusieurs interfaces (310) pour la communication ; et
un circuit de traitement de données (320) configuré pour exécuter le procédé (100) selon l'une quelconque des revendications 1 à 9.

12. Véhicule comprenant l'appareil (300) selon la revendication 11.
